# EUROPEAN PATENT APPLICATION

(11) **EP 0 949 504 A1**
(43) Date of publication of application: **13.10.1999**
(21) Application number: 98400831.8
(22) Date of filing: 07.04.1998
(51) Int. Cl.: G01N 25/68

(54) **Methods of determining condensable substances present in a volume of gas, and apparatuses for implanting the methods**

(71) Applicant: IMRA EUROPE S.A., F-06560 Valbonne (FR)
(72) Inventor: Ancey, Pascal, 06130 Grasse (FR); Ishihara, Kunio, 06600 Antibes (FR); Fontaine, Jean-Pierre, 06600 Antibes (FR); Laroche, Alain, 06160 Juan-Les-Pins (FR); Gschwind, Michel, 06130 Plascassier (FR)
(74) Representative: Leszczynski, André

(57) **Abstract**

A method of determining a magnitude characteristic of a quantity of condensable substances present in a volume of gas consists in determining a difference between the voltage across the terminals of a Peltier effect module (1) and a reference signal, calculating the time derivative of said difference, determining a special point of the derivative and using the special point to define the magnitude characteristic of the quantity of condensable substances present in the volume of gas.

Application to methods of determining a quantity of condensable substances present in a volume of gas and of determining a risk of condensation on a surface in contact with a volume of gas containing condensable substances.

Apparatuses for implementing the methods.

## Description

The present invention relates to methods of determining a magnitude characteristic of a quantity of condensable substances present in a volume of gas, for determining said quantity of condensable substances or a risk of condensation on a surface in contact with the volume of gas, and apparatuses for implementing such methods.

In the Applicants' earlier French patent application published under the number 2 702 049, there is already described a method of detecting the risk of water condensing on a surface in contact with a volume of humid air.

Such a method is particularly useful in anticipating the formation of mist on a vehicle windshield.

That method consists in using a sensor having a sensitive element which is taken to the temperature of the surface, and in subjecting said sensitive element to temperature oscillations around the temperature of the surface.

Although that method operates in satisfactory manner and provides reliable predictions, it requires the sensor to be monitored and the source of current used for powering the sensor to be controlled so as to prevent the temperature oscillations of the sensitive element giving rise to excessive drift in the temperature of the sensor.

Also, that method does not make it possible to determine the humidity level of the air present in the cabin of the vehicle.

Unfortunately, it can be advantageous to know what said humidity level is in order to control regulation devices such as air conditioning or heater means for the purpose of improving passenger comfort inside the vehicle cabin.

The present invention seeks to provide methods and apparatuses that are particularly simple and low in cost, enabling a magnitude characteristic of a quantity of condensable substances present in a volume of gas to be determined in a manner that is reliable.

When the condensable substance in the volume of gas is water in a volume of air, the invention makes it possible to determine a magnitude that is characteristic of the quantity of water present in the volume of air, and said magnitude can be used directly for controlling a regulator system, e.g. in the cabin of a vehicle.

Knowing said magnitude, it is also possible to determine the humidity level of the volume of air, or the risk of condensation on a surface in contact with the volume of air.

The present invention thus provides, firstly, a method of determining a magnitude characteristic of a quantity of condensable substances present in a volume of gas, the method being characterized by the fact that it consists in:
- putting a sensitive element of a Peltier effect module into contact with the volume of gas, bringing said sensitive element to a predetermined temperature, and subjecting it to a temperature cycle around the predetermined temperature, said cycle including both a cooling stage and a heating stage;
- during the heating stage, determining the difference between the voltage across the terminals of the Peltier effect module and a reference signal corresponding to the voltage which would be present across the terminals of the same Peltier effect module if its sensitive element were isolated from the volume of gas;
- calculating the time derivative of said difference;
- determining a special point of the derivative; and
- using the special point to define the magnitude characteristic of the quantity of condensable substances present in the volume of gas.

In the description below, the invention is sometimes described with water as the condensable substance and air as the gas, corresponding to the usual fields of application of the invention, however nothing in the present description should be interpreted as limiting the scope of the invention to those special cases.

Assuming that the condensable substance is water, the above method makes it possible to determine a magnitude that is characteristic of the quantity of water present in the air.

This magnitude can be used as such for controlling a regulator system.

By choosing the air temperature as the predetermined temperature, it is possible to deduce therefrom a magnitude characteristic of the relative humidity of the air.

If the predetermined temperature is that of a surface in contact with the volume of air, it is possible to deduce therefrom a magnitude characteristic of the risk of water condensing on said surface.

In a particular implementation of the invention, a pulse width modulated (PWM) signal is generated as the magnitude characteristic of the quantity of condensable substances present in the volume of gas, the modulation of the signal being determined by the times at which the derivative reaches the special point.

For example, the PWM signal may be given:
- the value TRUE throughout the cooling stage;
- the value FALSE at the beginning of the heating stage until the derivative reaches the special point; and
- the value TRUE during the remainder of the heating stage.

In this way, when the condensable substances are water in a volume of air and the sensitive surface of the sensor is taken to the temperature of the vehicle windshield, then the PWM signal obtained can be used directly to control an air conditioner or heater means for opposing the appearance of mist on the windshield.

In other words, in this application, there is no point in determining the relative humidity of the volume of air, given that the characteristic magnitude that is obtained serves directly for controlling the air conditioner or the heater means.

According to the invention, it is also possible from the PWM signal to calculate the duty ratio thereof and to take said duty ratio as the magnitude characteristic of the quantity of condensable substances present in the volume of gas.

In a particular variant, an output voltage is generated proportional to the duty ratio of the PWM signal, and said output voltage is used as the magnitude characteristic of the quantity of condensable substances present in the volume of gas.

This variant makes it possible to use the method of the invention for controlling conventional regulator devices which are controlled by an input voltage and not by a PWM signal.

According to the invention, the special point of the derivative may be selected as the point where the derivative becomes less than a predetermined threshold value.

In an implementation in which the special point of the derivative is the point at which the derivative becomes less than a predetermined threshold value, said threshold value is determined by performing the first three steps of the method of the invention in air that has no substances liable to condense at temperatures in the vicinity of the predetermined temperature and at the pressure of the volume of gas under consideration, thereby providing a value for the derivative that is substantially constant and that is taken as the threshold value.

In another variant, the special point of the derivative can be selected as the point at which the derivative is at a maximum.

In both cases, the method of the invention is advantageous in that it can be implemented without requiring the use of digital means, analog means such as a comparator and/or a differentiator being quite sufficient.

This simplifies the apparatus for implementing the method of the invention.

In a particular implementation of the invention, in order to define the characteristic magnitude on the basis of the point at which the derivative becomes less than the predetermined threshold value, a comparator signal is used whose value is equal:
- to a high predetermined voltage greater than the threshold value throughout the entire cooling stage of the temperature cycle;
- to the threshold value at the beginning of the heating stage, while the derivative exceeds the threshold value; and
- to the above-mentioned high voltage throughout the remainder of the heating stage.

It will be understood that this comparator signal corresponds, in analog form, to the PWM signal as defined above.

Several means exist in accordance with the invention for generating the reference signal.

In a first implementation of the invention, the reference signal is the voltage across the terminals of another Peltier effect module whose sensitive element is enclosed in a volume of gas that has no condensable substances, said other Peltier effect module being substantially identical to the module whose sensitive element is in contact with the volume of gas, and being subjected to the same temperature cycles.

In a second implementation, the reference signal is the voltage across the terminals of another Peltier effect module whose sensitive element is covered in a material that is proof against the condensable substances, e.g. a resin that is proof against water vapor, and that is thermally insulating, said other module being substantially identical to the module whose sensitive element is in contact with the volume of gas, and being subjected to the same temperature cycling.

In a third implementation of the invention, the reference signal is the opposite of the voltage across the terminals of another Peltier effect module substantially identical to that whose sensitive element is in contact with the volume of gas, the two modules being subjected to inverse temperature cycles.

In other words, in this implementation, the sensitive elements of the two Peltier effect modules are subjected to identical temperature oscillations that are offset by half a period, the voltage across the terminals of the module used for measurement during the heating stage being compared with the opposite of the voltage across the terminals of the other module which is in the cooling stage.

In a fourth implementation of the invention, the reference signal is supplied by a memory in which there has previously been stored the voltage across the terminals of the Peltier effect module during the cooling stage preceding the heating stage.

Under such circumstances, the opposite of the stored voltage is used, since the reference signal corresponds to cooling.

In a fifth implementation of the invention, the reference signal is supplied by an electronic circuit having at least one electronic component that is sensitive to variations in temperature, such as a thermistor or a diode, for example, said electronic component being selected so that the reference signal varies as a function of the mean temperature of the circuit in the same manner as the measurement signal from the Peltier effect module whose sensitive element is in contact with the volume of gas.

In a sixth implementation of the invention, the reference signal is delivered by a first electronic circuit which generates a stable signal that does not drift with temperature, and the circuit powering the Peltier effect module includes at least one electronic component such as a thermistor or a diode, for example, said electronic component being selected in such a manner that any temperature drift of the Peltier effect module causes the electrical properties of the electronic component to be modified, said modification being suitable for compensating the effect of temperature drift on the voltage across the terminals of the Peltier effect module.

The present invention also provides a method of determining a quantity of condensable substances present in a volume of gas, characterized by the fact that it consists in implementing the above-described method, in taking the temperature of the volume of gas as the predetermined temperature and in deducing the quantity of condensable substances therefrom by consulting a previously-established chart representing the relationship that exists between the quantity of condensable substances in the volume of gas and said characteristic magnitude.

In a particular application of the method, the condensable substance in the volume of gas is water in a volume of air, and the method serves to determine the relative humidity of the volume of air.

During testing of implementations of the invention, the inventors have observed that for relative humidity greater than a given minimum and for a given air temperature, there exists a linear relationship between the relative humidity of the volume of air and the duty ratio of the PWM signal.

Under such conditions, it is particularly simple to store charts since that consists in storing a conversion factor for various different air temperatures.

The present invention also provides a method of determining a risk of condensation on a surface in contact with a volume of gas containing condensable substances, the method being characterized by the fact that it consists in implementing the above-defined method, using as the predetermined temperature the temperature of the surface in contact with the volume of gas.

The present invention also provides apparatus for determining a magnitude characteristic of the quantity of condensable substances present in a volume of gas.

Such apparatus comprises: a Peltier effect module having a sensitive element placed in contact with the volume of gas, brought to a predetermined temperature, and suitable for being subjected to a temperature cycle around the predetermined temperature, said cycle including both a cooling stage and a heating stage; means for generating a reference signal corresponding to the voltage that would be present across the terminals of the Peltier effect module if its sensitive element were isolated from the volume of gas; a differential amplifier for determining, during the heating stage, the difference between the voltage across the terminals of the Peltier effect module and the reference signal; a differentiator for calculating the time derivative of said difference; and means for defining a magnitude characteristic of the quantity of condensable substances present in a volume of gas on the basis of the special point.

In a particular embodiment, the apparatus of the invention includes a PWM signal generator, with the signal being modulated at instants determined by the moments when the derivative reaches the special point.

In a particular variant, the apparatus includes a converter stage for calculating the duty ratio of the PWM signal and generating an output voltage proportional to the duty ratio.

In a first embodiment of the invention, the means for determining the special point of the derivative is a comparator which determines the instant at which the derivative becomes less than a predetermined threshold value.

In a second embodiment, said means for determining the special point of the derivative is constituted by a second differentiator and a comparator which determines the instant at which the derivative of the derivative is zero.

In a particular embodiment, the apparatus of the invention includes a comparison signal generator which sets the value of said comparison signal:
- to a predetermined high voltage greater than the threshold voltage throughout the cooling stage of the temperature cycle;
- to the threshold voltage at the beginning of the heating stage, while the derivative exceeds the threshold value; and
- to the above-mentioned high value throughout the remainder of the heating stage.

Thus, as already explained, once the threshold value has been crossed, the signal used for comparison purposes returns to its high value, thereby avoiding any new and untimely detection within the same temperature cycle.

The present invention also provides apparatus for determining the quantity of condensable substances present in a volume of gas, characterized by the fact that it comprises both apparatus as described above in which the sensitive element of the Peltier effect module is brought to the temperature of the volume of gas, and means for consulting a previously-established chart representing the relationship that exists between the quantity of condensable substances in the volume of gas and said characteristic value.

The present invention also provides apparatus for determining a risk of condensation on a surface in contact with a volume of gas containing condensable substances, characterized by the fact that it comprises apparatus as described above in which the sensitive surface of the Peltier effect module is brought to the temperature of the surface in contact with the volume of gas.

In order to make the invention better understood, embodiments are described below as non-limiting examples, with reference to the accompanying drawings, in which:
- Figure 1 is a diagram of the electronic circuit of apparatus of the invention;
- Figure 2 is a pair of graphs showing the voltage across the terminals of each of the Peltier effect modules in Figure 1;
- Figure 3 is a graph applicable to air having 98% relative humidity, showing the difference in voltage between the two Peltier effect modules of Figure 1 together with the derivative of said difference and the resulting PWM signal, for air at a temperature of +20 C;
- Figure 4 is analogous to Figure 3, for an air temperature of +5 C and relative humidity of 95%;
- Figure 5 is analogous to Figure 3, for an air temperature of -5 C, and relative humidity of 92%;
- Figures 6 to 8 correspond to Figures 3 to 5 for an atmosphere of dry air, in which relative humidity does not exceed 30%;
- Figure 9 is a pair of graphs showing PWM signals;
- Figure 10 is a graph showing the output voltage across the terminals of the Figure 1 apparatus as a function of the relative humidity of the air;
- Figure 11 is an electronic circuit suitable for generating a stable reference signal;
- Figure 12 is a circuit in which the Figure 11 circuit is used to generate a variable reference signal; and
- Figure 13 is a circuit in which the temperature drift of the module is compensated for comparison with a stable reference signal.

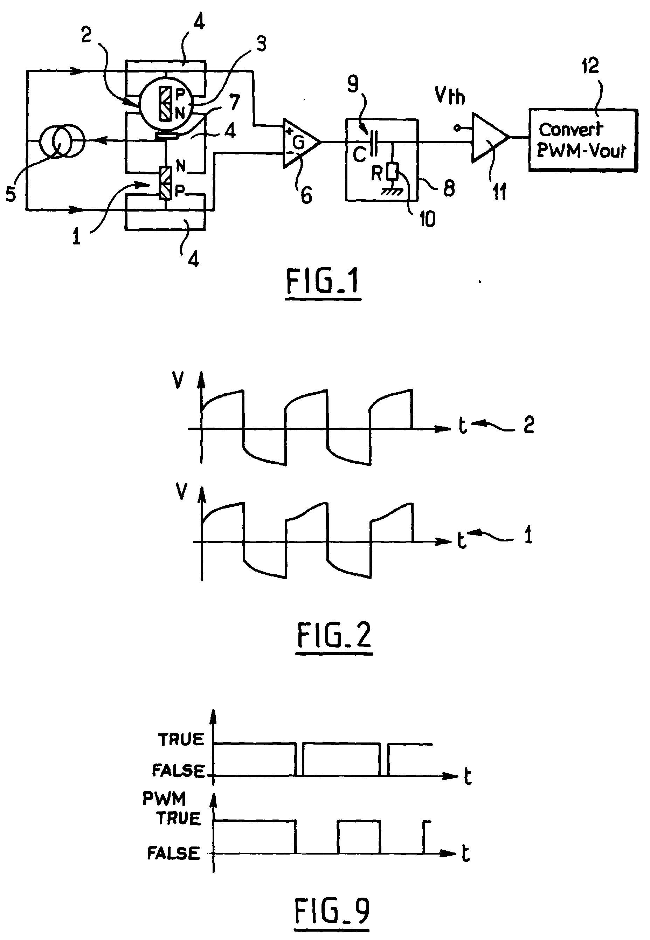

The Figure 1 apparatus comprises a first Peltier effect module 1 for measurement purposes having a sensitive element that is exposed to the air whose relative humidity is to be evaluated, and a second Peltier effect module 2 for reference purposes whose sensitive element is enclosed in an enclosure 3 which is filled with dry air.

The ends of both modules are embedded in thermal masses 4.

The two Peltier effect modules are selected so that in the absence of water, the Seebeck component of the reference module 2 varies slightly faster than that of the measurement module 1.

With the modules selected in this way, a resistor 7 is added in series with the measurement module so that the voltage of the reference module is greater than the voltage of the measurement module.

The purpose of these selections is to enable the voltage signals picked up from the terminals of the two Peltier effect modules to be processed simply in analog manner.

The two Peltier effect modules are connected in parallel on a current source 5 which generates constant heating current and constant cooling current, during constant heating and cooling durations.

The operation of the current generator 5 is not under the control of external means, but takes place in regular and identical manner for both Peltier effect modules.

The voltage across the terminals of each Peltier effect module is picked up and applied to a differential amplifier 6 of high gain (about 1000), thereby determining an amplified version of the difference between the two voltages.

For simplification purposes, this amplified difference is referred to as the "difference".

The difference output by the amplifier 6 is applied to a differentiator circuit 8 constituted by a capacitor 9 and a resistor 10.

The output signal from the differentiator, i.e. the derivative of the difference, is then applied to a comparator 11 which compares said derivative with a threshold voltage V to generate a pulse width modulated (PWM) signal.

The apparatus also includes a converter 12 for converting the PWM signal into an output voltage Vout of amplitude proportional to the duty ratio of the PWM signal.

This converter stage enables the apparatus described herein to control a conventional cabin regulator system which responds to different voltage values.

In another application, where the regulator system can make use of a PWM signal, then the conversion stage 12 can be omitted.

Figure 2 shows how the voltage across the terminals of each of the two Peltier effect modules varies over time, with the upper curve corresponding to the reference module 2 and the lower curve corresponding to the measurement module 1.

It can be seen that the measurement module 1 is subjected to a change in its voltage during the heating stages of the second and third cycles due to evaporation of the water that condensed during the cooling, while the reference Peltier effect module 2 is not subjected to any disturbance.

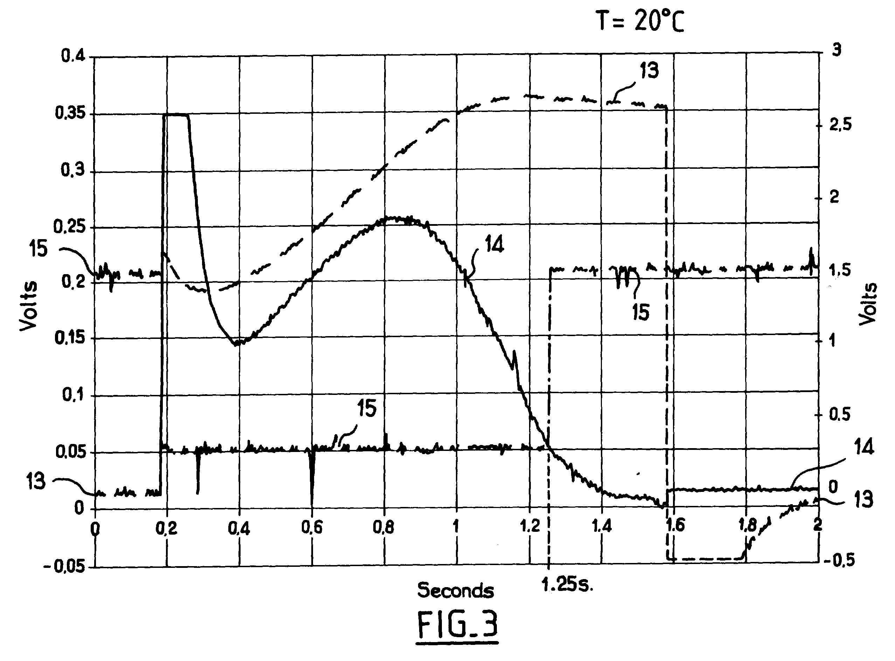

The difference between the two voltage signals makes it possible to obtain curves as shown in Figures 3 to 8 for air temperatures of +20 C, +5 C, and -5 C.

In these Figures, the voltage differences 13 are represented by dashed lines, the derivatives 14 by continuous lines, and the comparison signals 15 by dot-dashed lines.

The period of a temperature cycle is 2.8 seconds (s), and the cooling and heating cycles of each lasts for 1.4 s.

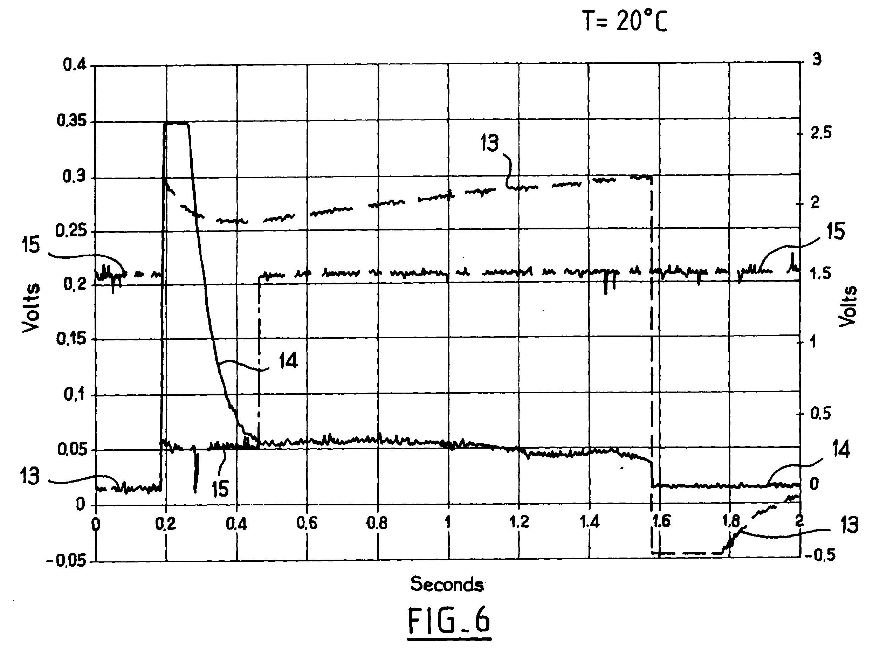

Figure 6 is now described which corresponds to measurements performed in dry air at a temperature of 20 C.

The first Peltier effect module and the second Peltier effect module are exposed to a volume of air, the humidity of which is so low that the air is considered as being dry.

However, the principles that will be explained hereafter are the sames as for wet air. Only the magnitude of curves is different between dry and wet air, as it will be understood regarding figures 3-5.

The cooling stage terminates at instant t = 0.2 s.

At the beginning of heating, it can be seen that the voltage difference 13, given on the right-hand scale graduated from -0.5 V to 3 V, is initially at about 2 V to 2.2 V, which corresponds to the resistive voltage due to the resistor 7.

During the first ten tenths of a second, the difference drops slightly, after which it returns to its initial value, in a substantially linear manner, having a slope of 0.05 V/s, as shown by its derivative, whose signal 14, plotted relative to the left-hand scale, ends up by stabilizing at a constant value of about 0.05 V.

It will be observed that the derivative signal 14 which is obtained by analog means has a time offset of about 0.15 s relative to the difference signal 13. As a result, the small drop in difference which occurs during the first tenths of a second is masked in the derivative signal 14.

The value of the threshold to be compared with the derivative in dry air is set to 0.05 V.

The comparison signal for determining the moment at which the derivative becomes less than 0.05 volts is shown in dot-dashed lines 15 using the left-hand scale graduated from -0.05 V to 0.4 V. It can be seen that throughout the cooling stage, the comparison signal is equal to the high voltage 0.21 V.

As soon as the heating stage begins, the comparison signal takes up its threshold value of 0.05 V.

As soon as the derivative becomes less than the threshold value, at about t = 0.45 s, t = 0.75 s, and t = 0.45 s, for air temperatures respectively of +20 C, +5 C, and -5 C, the voltage of the comparison signal is returned to its high value of 0.21 V, thereby avoiding any subsequent false detection in the event of the derivative exceeding the threshold value of 0.05 V because of noise in the derivative signal.

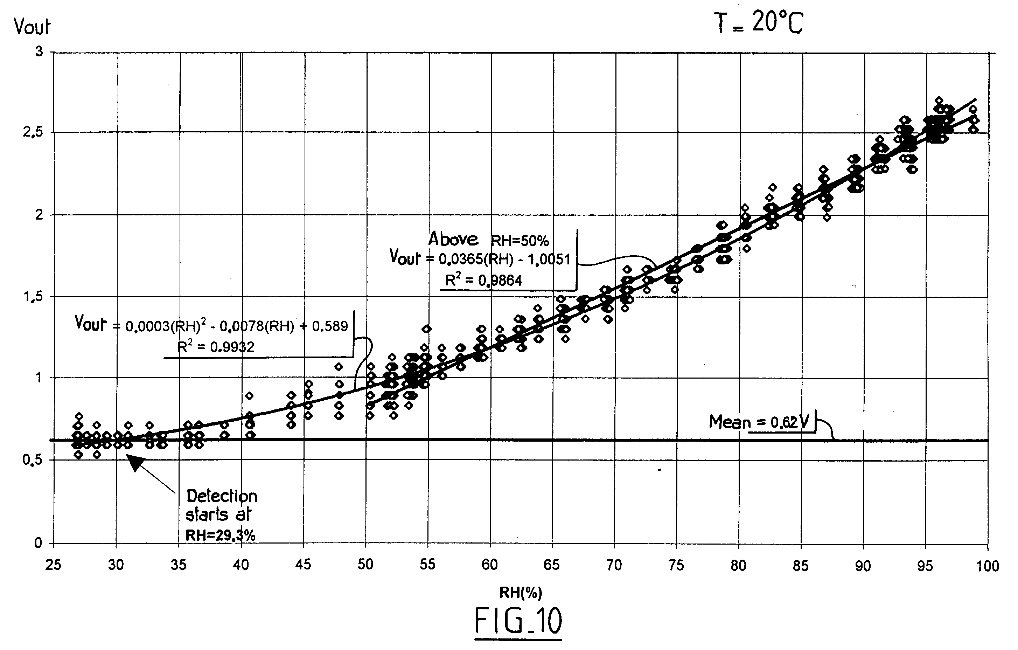

On the basis of the change in value of the comparison signal, a PWM signal is generated of the type shown in the top graph of Figure 9, which represents a risk of condensation that is zero or very low.

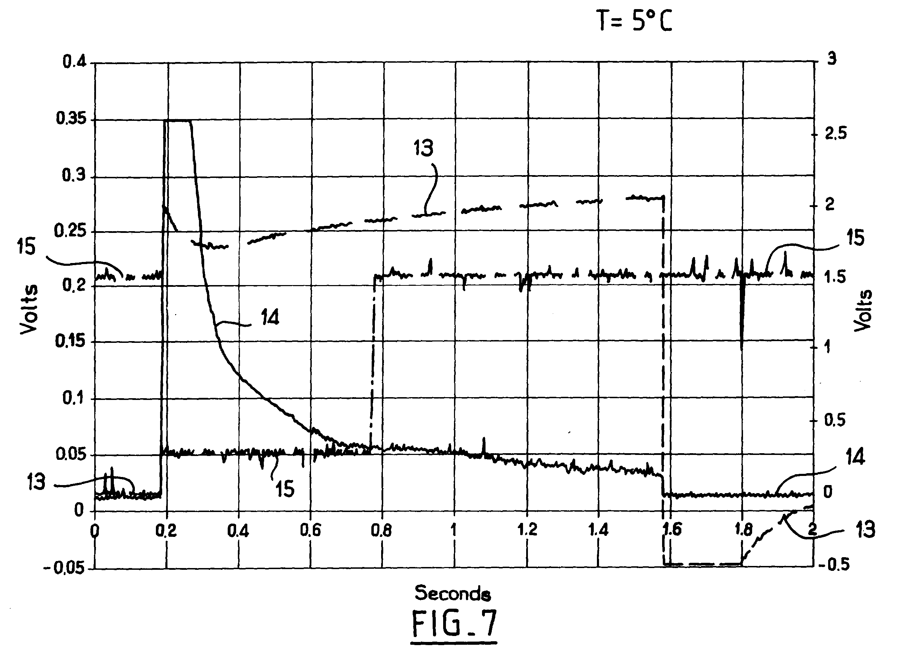

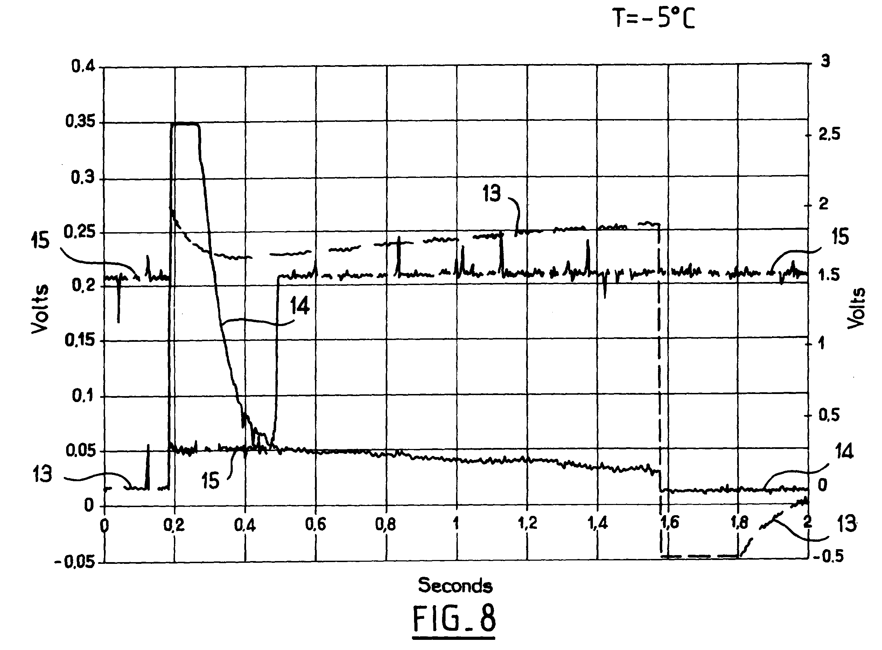

Figures 7 and 8 also correspond to measurements performed in dry air, i.e. with relative humidity of less than 30%, at temperatures respectively of +5 C and -5 C. These figures should be read in the same manner as that explained for Figure 6, with the exception that the mean amplitude of the difference signal 13 has a different value.

Figure 3 is now described which corresponds to measurements performed in humid air at a temperature of 20 C.

At the beginning of the heating stage, the temperature of the sensitive element of the Peltier effect module increases and it quickly exceeds the dew point temperature of the water contained in the air, at about t = 0.3 s. From that instant, the water that has condensed on the sensitive surface, essentially during the cooling stage, begins to evaporate.

The difference continues to increase up to about t = 0.7 s. At this instant, the difference curve 13 begins to droop, with the difference continuing to increase, but at a slower rate.

The point of inflection at t = 0.7 s is representative of the fact that water evaporation provides maximum compensation for the increase in temperature of the sensitive element, and thus for the increase in the Seebeck voltage across the terminals of the Peltier effect module. In other words, it is at this instant that the greatest fraction of the energy produced by the Peltier effect for heating the sensitive element is consumed in evaporating water.

Round about instant t = 1.1 s, all of the water present on the sensitive element of the measurement Peltier effect module has evaporated and the influence of such evaporation on the voltage across the terminals of the Peltier effect module disappears such that the difference between the two voltages is at a maximum.

Thereafter, this difference decreases and reaches the value of about 2.6 V.

The derivative of the difference, represented by a continuous line 14, is offset by about 0.15 s relative to the difference, as already explained.

Consequently, at about t = 0.85 s, it has a peak corresponding to the point of inflection of the difference (t = 0.7 s).

After this instant, the derivative of the difference decreases and drops to zero at about t = 1.6 s.

The derivative of the difference becomes less than the threshold value of 0.05 V at about t = 1.25 s.

This point is selected as the point characteristic of the relative humidity of the volume of air.

In another embodiment, it is possible to select the peak of the derivative at about t = 0.85 s, however that would require means for calculating the second derivative of the difference.

In the same manner as in Figures 6 to 8, a PWM signal is obtained having a waveform substantially the same as the signal shown in the bottom graph of Figure 9, which represents a very high risk of misting.

The PWM signal can be used directly to control a regulator system, or it can be converted into an output voltage Vout.

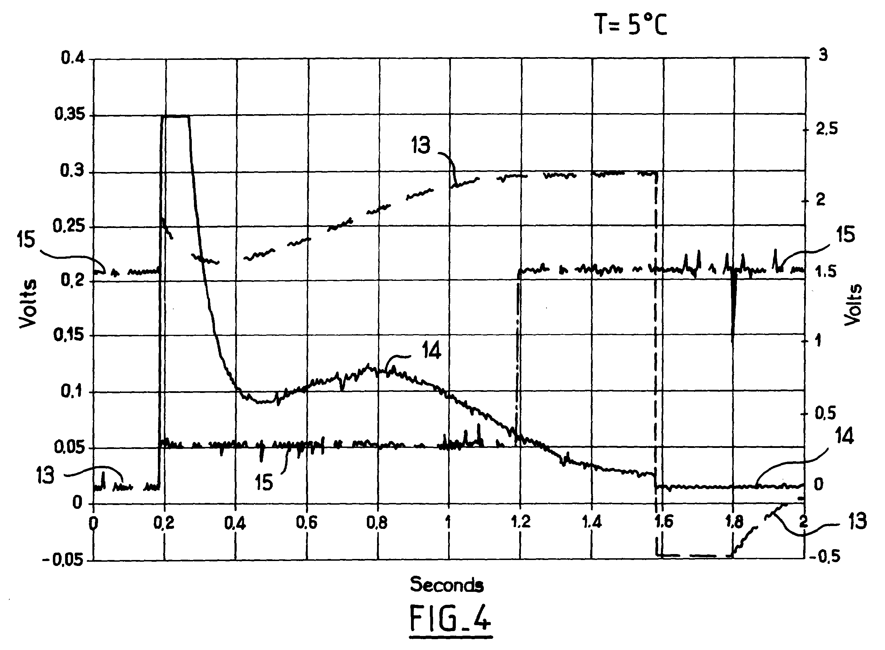

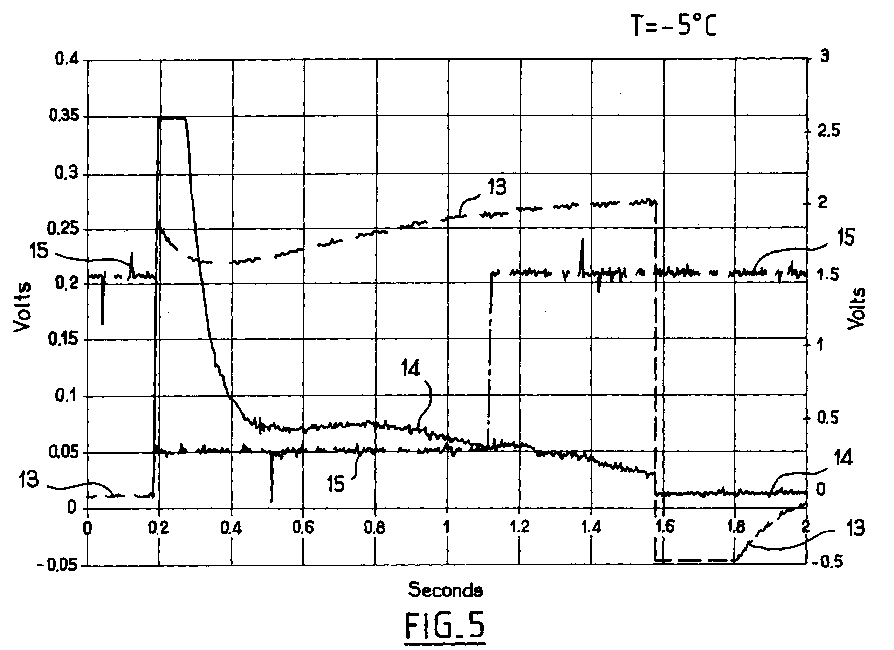

Figures 4 and 5 also correspond to measurements performed in a humid atmosphere, at temperatures respectively of +5 C and -5 C. These figures are to be read in the same manner as that explained for Figure 3, with the exception that the mean amplitude of the difference signal 13 takes on a different value.

The cloud of points and the correlation curve given in Figure 10 show that there is a simple relationship between the output voltage Vout and the relative humidity RH of the volume of air at a temperature of 20 C.

It is obvious, however, that a similar relationship exists at any temperature of the air, i.e. not only at 20°C.

It can be seen that for the volume of air having a relative humidity in excess of 50%, the output voltage Vout is linearly proportional to the relative humidity.

For relative humidities of less than 50% and greater than about 30%, it is possible to establish a second order polynomial relationship between these two values.

Below 30% relative humidity and with the temperature amplitude used during the temperature cycling of the sensitive element, no condensation takes place during the cooling stages so no measurement is available.

When consulting such a chart, it is possible on the basis of information concerning the output voltage Vout delivered by the Figure 1 apparatus to determine the relative humidity of the volume of air.

The above-described apparatus is particularly advantageous because there is no need to provide temperature compensation for the drift of the measurement Peltier effect module since the reference Peltier effect module is subject to the same temperature drift and only the difference between the voltages across the terminals of these two modules is taken into account.

Naturally, when drift is too great, it is possible in accordance with the invention to provide for both Peltier effect modules to have a rest period so as to enable them to return to ambient temperature.

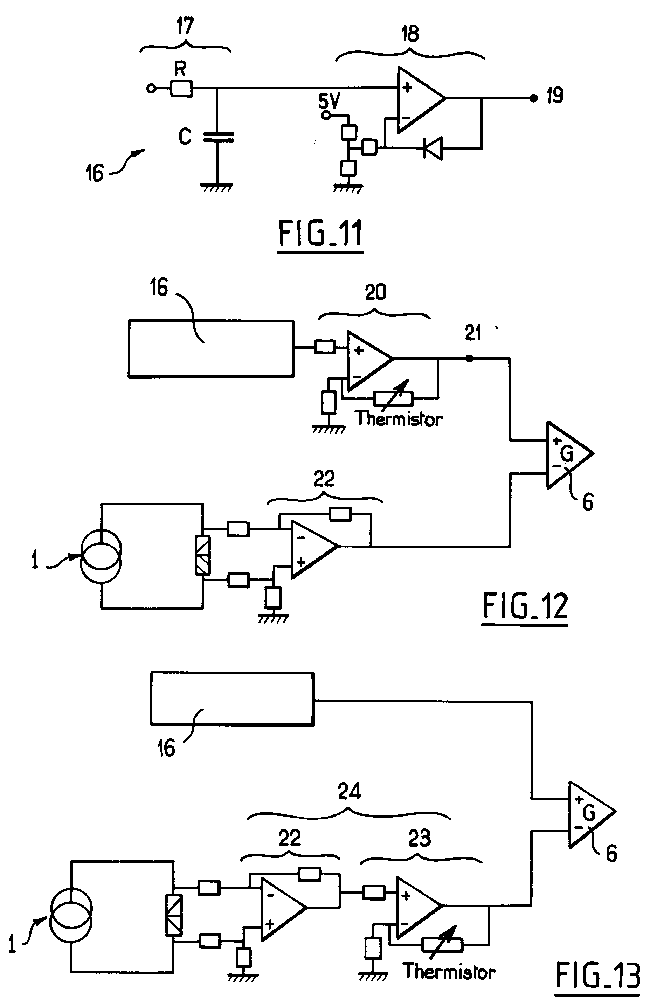

In Figure 11, there is shown an example of an electronic circuit that is suitable for generating a stable reference signal.

This circuit 16 comprises an RC first portion 17 generating the equivalent of the Seebeck component of the reference signal, and a second portion 18 constituted by an operational amplifier together with resistors, and suitable for generating the equivalent of the resistive component of the reference signal.

At the output 19 of this circuit, a stable reference signal is obtained, i.e. a signal that does not change its parameters in the event of the thermal masses 4 changing temperature, and having an amplitude of the order of 5 V.

In the circuit of Figure 12, the Figure 11 circuit 16 is installed as a replacement for the reference Peltier effect module.

A second circuit 20 constituted by an operational amplifier and resistors, including a thermistor integrated in the thermal masses 4, is connected in series with the circuit 16 to cause the signal delivered by the terminal 19 to vary as a function of temperature changes in the thermal masses 4 so that the reference signal simulated at the output 21 of the second circuit 20 varies in the same manner as the signal delivered by the measurement module 1 in the event of said module drifting in temperature.

In this case, the circuit 20 is a variable gain amplifier circuit whose gain increases with increasing temperature of the thermal masses 4.

The measurement signal from the Peltier element 1 is amplified by an amplifier circuit 22 whose sole function is to bring the amplitude of the measurement signal to a value that is comparable with that of the simulated reference signal.

The amplified measurement signal and the simulated reference signal are then applied to the differential amplifier 6 as described above.

In the circuit of Figure 13, the Figure 11 circuit 16 delivers a stable reference signal while a second circuit 23, constituted by an operational amplifier and resistors, including a thermistor integrated in the thermal masses 4, is connected in series with the measurement Peltier effect module and its amplifier circuit 22 in order to compensate for the effects of changes in the temperature of the thermal masses on the measurement signal.

In this case, the circuit is a variable gain amplifier circuit whose gain decreases with increasing temperature of the thermal masses.

Consequently, in this circuit, the differential amplifier 6 compares two signals that are stable in the sense that these signals are not subjected to the temperature changes of the thermal masses.

It will be observed that the Figure 13 circuit is advantageous since it minimizes the number of components required, particularly if the fixed gain amplifier circuit 22 is combined with the variable gain amplifier circuit 23 in a single variable gain amplifier circuit 24.

The apparatus of the invention presents numerous advantages, including the following which are mentioned specially:
- There is no need to perform an accurate measurement of voltage since comparing the voltages from the two Peltier effect modules eliminates the resistive component in said voltage and amounts to comparing the Seebeck components thereof directly.
- The measurement algorithm can be implemented by means that are purely analog, thereby eliminating the need for any digital component which by definition is of limited precision.
- Both Peltier effect modules are powered by the same current source which imposes its own operating conditions so there is no need for calibration.
- Since both Peltier effect modules are subject to temperature drift in identical manner, there is no need to provide for a pause at the end of each temperature cycle, thereby making it possible to obtain response times that are particularly short.
- The duty ratio of the PWM signal, or the voltage of the output signal when conversion is used, is directly proportional to the risk of mist forming, if that is the looked-for magnitude.
- The high gain of the differential amplifier makes it possible to detect small quantities of water and very low dew point temperatures, of the order of -10 C.

Naturally, the embodiments described above are not limiting in any way and could be modified in any desirable manner without thereby going beyond the ambit of the invention.

In particular, although examples are described with reference to water in a volume of air, it is clear that the invention is applicable to any condensable substance present in any gas.

## Claims

1. A method of determining a magnitude characteristic of a quantity of condensable substances present in a volume of gas, the method being characterized by the fact that it consists in:
- putting a sensitive element of a Peltier effect module (1) into contact with the volume of gas, bringing said sensitive element to a predetermined temperature, and subjecting it to a temperature cycle around the predetermined temperature, said cycle including both a cooling stage and a heating stage;
- during the heating stage, determining the difference (13) between the voltage across the terminals of the Peltier effect module (1) and a reference signal corresponding to the voltage which would be present across the terminals of the same Peltier effect module if its sensitive element were isolated from the volume of gas;
- calculating the time derivative (14) of said difference;
- determining a special point of the derivative; and
- using the special point to define the magnitude characteristic of the quantity of condensable substances present in the volume of gas.

2. A method according to claim 1, characterized by the fact that a PWM signal is generated as the magnitude characteristic of the quantity of condensable substances present in the volume of gas, the modulation of the signal being determined by the times at which the derivative reaches the special point.

3. A method according to claim 2, characterized by the fact that the PWM signal is given:
- the value TRUE throughout the cooling stage;
- the value FALSE at the beginning of the heating stage until the derivative reaches the special point; and
- the value TRUE during the remainder of the heating stage.

4. A method according to claim 2, characterized by the fact that it consists in calculating the duty ratio of the PWM signal and in taking said duty ratio as the magnitude characteristic of the quantity condensable substances present in the volume of gas.

5. A method according to claim 4, characterized by the fact that an output voltage is generated proportional to the duty ratio of the PWM signal, and said output voltage is used as the magnitude characteristic of the quantity of condensable substances present in the volume of gas.

6. A method according to any one of claims 1 to 5, characterized by the fact that the special point of the derivative is selected to be the point where the derivative becomes less than a predetermined threshold value.

7. A method according to claim 6, characterized by the fact that the threshold value is determined by performing the first three steps of the method in a volume of gas that is free from substances liable to condense at temperatures close to the predetermined temperature and at the pressure of the volume of gas, and that the threshold value is taken as the substantially constant value of the derivative.

8. A method according to any one of claims 1 to 5, characterized by the fact that the maximum value of the derivative is selected as the special point thereof.

9. A method according to any one of claims 1 to 7, characterized by the fact that to define the characteristic magnitude from the point where the derivative becomes less than the predetermined threshold value, a comparison signal (15) is used whose value is equal:
- to a high predetermined voltage greater than the threshold value throughout the entire cooling stage of the temperature cycle;
- to the threshold value at the beginning of the heating stage, while the derivative exceeds the threshold value; and
- to the above-mentioned high voltage throughout the remainder of the heating stage.

10. A method according to any one of claims 1 to 9, characterized by the fact that the reference signal is the voltage across the terminals of another Peltier effect module (2) whose sensitive element is enclosed in a volume of gas that has no condensable substances, said other Peltier effect module being substantially identical to the module whose sensitive element is in contact with the volume of gas, and being subjected to the same temperature cycles.

11. A method according to any one of claims 1 to 9, characterized by the fact that the reference signal is the voltage across the terminals of another Peltier effect module whose sensitive element is covered in a material that is proof against the condensable substances, e.g. a resin that is proof against water vapor, and that is thermally insulating, said other module being substantially identical to the module whose sensitive element is in contact with the volume of gas, and being subjected to the same temperature cycling.

12. A method according to any one of claims 1 to 9, characterized by the fact that the reference signal is the opposite of the voltage across the terminals of another Peltier effect module substantially identical to that whose sensitive element is in contact with the volume of gas, the two modules being subjected to inverse temperature cycles.

13. A method according to any one of claims 1 to 9, characterized by the fact that during the cooling stage preceding the heating stage, the voltage across the terminals of the Peltier effect module is stored, and the opposite of said stored voltage is used as the reference signal.

14. A method according to any one of claims 1 to 9, characterized by the fact that the reference signal is supplied by an electronic circuit having at least one electronic component that is sensitive to variations in temperature, such as a thermistor or a diode, for example, said electronic component being selected so that the reference signal varies as a function of the mean temperature of the circuit in the same manner as the measurement signal from the Peltier effect module whose sensitive element is in contact with the volume of gas.

15. A method according to any one of claims 1 to 9, characterized by the fact that the reference signal is delivered by a first electronic circuit which generates a stable signal that does not drift with temperature, and that the circuit powering the Peltier effect module includes at least one electronic component such as a thermistor or a diode, for example, said electronic component being selected in such a manner that any temperature drift of the Peltier effect module causes the electrical properties of the electronic component to be modified, said modification being suitable for compensating the effect of temperature drift on the voltage across the terminals of the Peltier effect module.

16. A method of determining a quantity of condensable substances present in a volume of gas, characterized by the fact that it consists in implementing the method according to any preceding claim, in taking the temperature of the volume of gas as the predetermined temperature and in deducing the quantity of condensable substances therefrom by consulting a previously-established chart representing the relationship that exists between the quantity of condensable substances in the volume of gas and said characteristic magnitude.

17. A method of determining a risk of condensation on a surface in contact with a volume of gas containing condensable substances, the method being characterized by the fact that it consists in implementing the method according to any one of claims 1 to 15, taking the temperature of the surface in contact with the volume of gas as the predetermined temperature.

18. Apparatus for determining a magnitude characteristic of the quantity of condensable substances present in a volume of gas, the apparatus being characterized by the fact that it comprises:
- a Peltier effect module (1) having a sensitive element placed in contact with the volume of gas, brought to a predetermined temperature, and suitable for being subjected to a temperature cycle around the predetermined temperature, said cycle including both a cooling stage and a heating stage;
- means (2) for generating a reference signal corresponding to the voltage that would be present across the terminals of the Peltier effect module if its sensitive element were isolated from the volume of gas;
- a differential amplifier (6) for determining, during the heating stage, the difference between the voltage across the terminals of the Peltier effect module and the reference signal;
- a differentiator (9) for calculating the time derivative of said difference; and
- means (12) for defining a magnitude characteristic of the quantity of condensable substances present in a volume of gas on the basis of the special point.

19. Apparatus according to claim 18, characterized by the fact that it includes a PWM signal generator, with the signal being modulated at instants determined by the moments when the derivative reaches the special point.

20. Apparatus according to claim 19, characterized by the fact that it includes a converter stage for calculating the duty ratio of the PWM signal and generating an output voltage (Vout) proportional to the duty ratio.

21. Apparatus according to any one of claims 18 to 20, characterized by the fact that the means for determining the special point of the derivative is a comparator (11) which determines the instant at which the derivative becomes less than a predetermined threshold value.

22. Apparatus according to any one of claims 18 to 20, characterized by the fact that the means for determining the special point of the derivative is constituted by a second differentiator and a comparator which determines the instant at which the derivative of the derivative is zero.

23. Apparatus according to any one of claims 18 to 21, characterized by the fact that it includes a comparison signal generator which sets the value of said comparison signal:
- to a predetermined high voltage greater than the threshold voltage throughout the cooling stage of the temperature cycle;
- to the threshold voltage at the beginning of the heating stage, while the derivative exceeds the threshold value; and
- to the above-mentioned high value throughout the remainder of the heating stage.

24. Apparatus according to any one of claims 18 to 23, characterized by the fact that the means for generating a reference signal is another Peltier effect module (2) whose sensitive surface is enclosed in a volume of gas that has no condensable substances, said other Peltier effect module being substantially identical to that whose sensitive circuit is in contact with the volume of gas and being subjected to the same temperature cycles.

25. Apparatus according to any one of claims 18 to 23, characterized by the fact that the means for generating a reference signal is another Peltier effect module whose sensitive element is covered in a material that is proof against the condensable substances, for example a resin that is proof against water vapor, and that is thermally insulating, said other module being substantially identical to the module whose element is in contact with the volume of gas and being subjected to the same temperature cycling.

26. Apparatus according to any one of claims 18 to 23, characterized by the fact that the means for generating a reference signal is another Peltier effect module substantially identical to the module whose sensitive element is in contact with the volume of gas, the two modules being subjected to inverse temperature cycles.

27. Apparatus according to any one of claims 18 to 23, characterized by the fact that the means for generating a reference signal is a memory which, during the cooling stage preceding the heating stage, stores the voltage across the terminals of the Peltier effect module.

28. Apparatus according to any one of claims 18 to 23, characterized by the fact that the means for generating a reference signal is an electronic circuit including at least one electronic component that is sensitive to temperature variations, such as a thermistor or a diode, for example, said electronic component being selected in such a manner that the mean temperature variations of the circuit produce on the reference signal substantially the same effects as on the Peltier effect module whose sensitive element is in contact with the volume of gas.

29. Apparatus according to any one of claims 18 to 23, characterized by the fact that the means for generating the reference signal is an electronic circuit which generates a stable signal that does not drift with temperature, and that the power supply circuit of the Peltier effect module includes at least one electronic component such as a thermistor or a diode, for example, said electronic component being selected in such a manner that any temperature drift of the Peltier effect module modifies the electrical properties of the electrical component, said modification being suitable for compensating the effect of temperature drift on the voltage across the terminals of the Peltier effect module.

30. Apparatus for determining a quantity of condensable substances present in a volume of gas, the apparatus being characterized by the fact that it comprises both apparatus according to any one of claims 18 to 29, in which the sensitive element of the Peltier effect module is brought to the temperature of the volume of gas and means for constituting a previously-established chart representing the relationship that exists between the quantity of condensable substances in the volume of air and said characteristic magnitude.

31. Apparatus for determining a risk of condensation on a surface in contact with a volume of gas containing condensable substances, the apparatus being characterized by the fact that it comprises apparatus according to any one of claims 18 to 29 in which the sensitive element of the Peltier effect module is brought to the temperature of the surface in contact with the volume of gas.
